# EUROPEAN PATENT SPECIFICATION

(11) **EP 3 476 189 B1**
(45) Date of publication and mention of the grant of the patent: **14.09.2022**
(21) Application number: 17199248.0
(22) Date of filing: 30.10.2017
(51) Int. Cl.: A01B 29/06, A01B 59/04, A01B 49/02

(54) **AN EARTH-WORKING ROLLER SYSTEM FOR AN AGRICULTURAL MACHINE**
ERDARBEITSWALZENSYSTEM FÜR EINE LANDWIRTSCHAFTLICHE MASCHINE
SYSTÈME DE GALET DE TERRASSEMENT POUR UNE MACHINE AGRICOLE

(43) Date of publication of application: 01.05.2019
(73) Proprietor: Kverneland Group Les Landes Genusson S.A.S., 85130 Les Landes Genusson (FR)
(72) Inventor: SECHET, Arnaud, 49450 Villedieu La Blouère (FR); PASQUIER, Gaëtan, 85110 Saint Cécile (FR)
(74) Representative: Bittner, Thomas L.

(56) References cited:
- EP-A1- 0 201 612
- US-A- 2 907 394
- US-A- 3 220 488
- US-A- 4 418 761

## Description

The invention relates to an earth-working roller system for an agricultural machine such as an implement.

### Background

Earth-working roller systems which may also be referred to soil-working roller systems may be provided with different kinds of agricultural machines. There are earth-working roller systems comprising an earth-working roller assembly having a first earth-working roller member and a second earth-working roller member, wherein the earth-working roller members are supported by a drawbar fixedly connected to support members receiving the first and second earth-working roller members. Document EP 2 759 187 B1 discloses an earth-working roller system in which the earth-working roller assembly is enabled for pivotal movement relative to a frame member.

An earth-working roller system is also disclosed in EP 2 832 198 A1.

In general, the earth-working roller system is used for applying rollers to soil or earth.

The document US 2,907,394 A discloses a device for mounting an agricultural implement for elevationally adjustable movement on a draft appliance comprising a substantially upright lift frame mounted on the appliance, a draft frame pivotally connected to the lift frame and rearwardly extended therefrom, forward links pivotally supported in the draft frame and downwardly extended therefrom, the draft frame including an elongated guide member extended transversely thereof and journaled for rotation rearwardly of the forward links, a hitch frame having a forward end portion pivotally supported on the forward links and a rearwardly extended portion connected to the implement, rear links pivotally connected to the hitch frame, slide rods having lower ends rigidly connected to the rear links and slidably upwardly extended through the guide member, stop members connected to the slide rods above the guide member, and coiled compression springs fitted over the slide rods between the stops and the guide member for yieldably resiliently resisting downward pivotal movement on the hitch frame relative to the draft frame.

In the document EP 0 201 612 A1, a follow-up accessory is described which consists of a roller and of a further accessory tool, for example a roller. During a rearward movement of the follow-up accessory, the roller tilts from a working position, in which carriers for the roller bear against stops, into a parking position, in which the roller is towed along on the ground.

The document US 4,418,761 A discloses a mounting/positioning apparatus for attaching an agricultural implement such as a reel unit or a rotary packer assembly to the frame of a tillage machine. The apparatus includes two opposing end portions rigidly coupled together by means of a cross member with the agricultural implement rotationally mounted between the two opposing end portions. The two end portions are pivotally coupled to a first frame cross member to which is rigidly coupled one end of a second frame member extending rearwardly therefrom. The other end of the second frame member is flexibly coupled to the cross member by means of a longitudinally compressible spring providing for the vertical displacement of the rotating implement upon impact with an obstruction. Spring tension is adjustable for varying the downward force applied to the working implement with the second frame member incorporating shear pin protection for the implement against high impact forces applied thereto from contact with rocks and other obstructions.

### Summary

It is an object of the present invention to provide a technology for an earth-working roller system for an agricultural machine which allows for improved operation of the earth-working roller system.

For solving the object, an earth-working roller system for an agricultural machine according to claim 1 is provided. Embodiments are the subject of dependent claims.

According to an aspect, an earth-working roller system for an agricultural machine is provided, the earth-working roller system comprising an earth-working roller assembly. The earth-working roller assembly comprises a first earth-working roller member and a second earth-working roller member, and a first support member and a second support member. The first and second support members are supporting the first and second earth-working rollers on opposite sides in a relative position and are allowing free rotation of the first and second earth-working rollers. The earth-working roller system is further comprising a frame member, and a joint assembly connecting the earth-working roller assembly and the frame member.

The joint assembly is adapted to allow rotational or pivotal movement of the earth-working roller assembly relative to the frame member. Further, there is a first adjustment mechanism adapted to adjust a movement limitation for the rotational or pivotal movement of the earth-working roller assembly relative to the frame member.

In an alternative embodiment, not being part of the claimed invention, an earth-working roller system for an agricultural machine may be provided, comprising an earth-working roller assembly. The earth-working roller assembly may comprise a first earth-working roller member and a second earth-working roller member; and a first support member and a second support member, the first and second support members supporting the first and second earth-working rollers in a relative position and allowing free rotation of the first and second earth-working rollers. The earth-working roller system may further comprise a frame member; and a joint assembly connecting the earth-working roller assembly and the frame member, the joint assembly being adapted to allow rotational movement of the earth-working roller assembly relative to the frame member. Further, the earth-working roller system is provided with a second adjustment mechanism, the second adjustment mechanism being adapted to adjust the relative position of the first and second earth-working roller members supported on the first and second support members.

The first and second adjustment mechanism each of which may be applied alone or in combination together both provide for improved operation of the earth-working roller system by providing alternative options for adjusting relative positioning with regard to elements or parts of the earth-working roller system.

The agricultural machine may be an implement. The agricultural machine may comprise at least one of: cultivator, seeder, tine harrow, disc harrow, seedbed harrow, subsoiler, plough, and chopper.

The first adjustment mechanism allows for improved control with regard to the operation of the earth-working roller system.

The first adjustment mechanism may be adapted to provide a first movement limitation and a second movement limitation different from the first movement limitation, wherein, for the rotational movement of the earth-working roller assembly relative to the frame member, the first movement limitation allows for rotational movement along a first circular arc section and the second movement limitation allows for the rotational movement along a second circular arc section different from the first circular arc section. The rotational or pivotal movement of the earth-working roller assembly relative to the frame member may be more limited with the second movement limitation applied. In this case the second circular arc is shorter or smaller than the first circular arc section.

The joint assembly comprises a first joint member having a guiding opening and a second joint member having a guiding member, the guiding member being movable along the guiding opening during the rotational movement of the earth-working roller assembly relative to the frame member. The joint assembly is connecting or coupling the earth-working roller assembly to the frame member, thereby, allowing rotational or pivotal movement of the earth working roller assembly relative to the frame member. The guiding member received moveable along the guiding opening provides guiding while the earth-working roller assembly is moved relatively to the frame member in operation of the earth-working roller system. End sections of the guiding opening provide for movement limitations with regard to the guiding member received in the guiding opening, thereby, limiting the rotational movement of the earth-working roller assembly relative to the frame member.

One or more stop members are releasably provided in the guiding opening. The one or more stop members define a shortened trajectory compared to a (non-shortened) trajectory provided for the guiding member in the guiding opening without having the one or more stop members releasably provided in the guiding opening. The one or more stop members may comprise one or more stop pins which can be releasably mounted, for example, by screwing or sliding in. More than one stop members may be provided in the guiding opening. The stop members may provide for limiting points along the trajectory provided for the guiding member in the guiding opening.

The one or more stop members releasably provided in the guiding opening may be adapted to limit, with regard to a starting position of the earth-working roller assembly relative to the frame member, rotational movement of the earth-working roller assembly relative to the frame member to at least one side. The one or more stop members may limit the trajectory for the relative movement between the earth-working roller assembly and the frame member compared to the case having no stop member provided in the guiding opening, thereby, shortening the trajectory of movement. The starting position not being an end position within the guiding opening may be a center position or a position adjacent to the center of the trajectory provided by the guiding opening. The one or more stop members may limit rotation into one direction of rotation or both opposite directions of rotation.

The one or more stop members releasably be provided in the guiding opening may be adapted to prevent, with regard to the starting position of the earth-working roller assembly relative to the frame member, rotational movement of the earth-working roller assembly relative to the frame member to at least one side. In such embodiment there is no rotational movement (rotation) possible for the relative movement between the roller assembly and the frame member to this side of the starting position. The relative rotational movement may be prevented or blocked for both directions of rotation with regard to the starting position.

The one or more stop members releasably be provided in the guiding opening may be adapted to allow, with regard to the starting position of the earth-working roller assembly relative to the frame member, rotational movement of the earth-working roller assembly relative to the frame member to an opposite side.

An actuator member may functionally be connected to the joint assembly, the actuator member allowing the rotational movement of the earth-working roller assembly relative to the frame member. The actuator member does allow rotational or pivotal movement of the earth-working roller assembly relative to the frame member. However, the actuator member may be operated for not allowing the rotational movement of the earth-working roller assembly relative to the frame member in an alternative operation mode. The actuator member may be applied in combination with the embodiment in which the joint assembly is provided with the first and second joint members. Alternatively, the actuator member may be provided for exclusively providing the first adjustment mechanism, specifically, without having applied the first and second joint members having the guiding opening and the guiding member, respectively.

The actuator member may be adapted to attenuate the rotational movement of the earth-working roller assembly relative to the frame member.

The actuator member may be adapted to limit the rotational movement of the earth-working roller assembly relative to the frame member. The actuator member may be provided in different operation modes, the different operation modes providing different limitations for or limits to the rotational movement of the earth-working roller assembly relative to the frame member.

The actuator member may comprise at least one of the following: a hydraulic actuator adapted to provide a hydraulic force, a mechanical actuator adapted to provide a mechanical force such as a mechanical force such as a spindle member, and / or a spring member, a magnetic actuator adapted to provide a magnetic force, a pneumatic actuator adapted to provide a pneumatic force, and an electric actuator adapted to provide an electric force.

A second adjustment mechanism may be provided. The second adjustment mechanism may be adapted to adjust the relative position of the first and second earth-working roller members supported on the first and second support members. The second adjustment mechanism allows for adjusting the relative position of the first and second earth-working rollers. The second adjustment mechanism may comprise at least one of the following: a plurality of holes for providing support for the first and second earth-working roller members, guiding openings or holes, and a support member rotatably received on a base support member. The support members may provide for adjustment of the relative position of the first and second earth-working roller members by rotational or pivotal movement of the support members relative to each other.

The second adjustment mechanism may be adapted to adjust a distance between a first axis of rotation for the first earth-working roller member and a second axis of rotation for the second earth-working roller member. The adjustment of the distance between the first axis of rotation for the first earth-working roller member and the second axis of rotation for the second earth-working roller member may be applied for providing or preventing overlapping between the first and second earth-working roller member. Also, a degree of overlapping may be adjusted.

On opposite sides of the first and second earth-working rollers of the earth-working roller system, for both the first and second support members a first support element holding the first earth-working roller may be provided on the frame member. A second support element holding the second earth-working roller may provided on the support member. The first and second support elements are pivotably connected through the joint assembly. For the first and second support elements relative rotational movement may be allowed by the joint assembly. An actuator may be provided for adjusting the joint assembly, thereby, adjusting rotational positioning of the first and second support elements on the opposite sides. In turn, such adjustment will adjust the relative positioning / relative movement of the first and second earth-working rollers.

The first and second support elements may be pivotable around an axis extending through a pivot point. An actuator may be assigned to the pivot point and adapted to adjust a relative position of the first and second support members. The actuator may be at least one of a hydraulic actuator, an electric actuator, and a mechanical actuator.

The first and second earth-working roller members may be selected from the following group of earth-working roller members: rolling baskets, rotors, conditioners, and packers.

The earth-working roller assembly may comprise a draw bar or other frame member which may be extending transversely to a moving direction. The first and second support members may be fixedly connected to a first portion on one side of the draw bar and a second portion on an opposite side of the draw bar, respectively.

According to another embodiment, not being part of the claimed invention, an earth-working roller system for an agricultural machine may be provided, the earth-working roller system comprising an earth-working roller assembly. The earth-working roller assembly comprises a first earth-working roller member and a second earth-working roller member. A first support element is provided supporting the first earth-working roller on opposite sides and allowing free rotation of the first earth-working roller. A second support element is provided supporting the second earth-working roller on opposite sides and allowing free rotation of the second earth-working roller. The first and second support elements are connected by a joint assembly on the opposite sides of the earth-working rollers. The joint assembly is adapted to allow limited rotational or pivotal movement and / or block such rotational or pivotal movement of the first earth-working roller relative to the second earth-working roller. In such embodiment, the first and second support members each comprise first and second support elements pivotably connected. On opposite sides of the earth-working rollers, the first support elements holding the first earth-working roller are provided by frame members to which, via the joint assembly, the second support elements holding the second earth-working roller are pivotably connected. On each of opposite sides, the first and second support members holding the first and second earth-working rollers comprise parts or elements, namely the first and second support elements, pivotably connected. The joint assembly is adjustable for adjusting the rotational or pivotal movement of the first earth-working roller relative to the second earth-working roller in operation. Again, such technology provides for improved operation of the earth-working roller system by providing another option for adjusting relative positioning with regard to elements or parts of the earth-working roller system.

Further, as an option, the first and / or the second adjustment mechanism may be applied in combination.

In an alternative embodiment, not being part of the claimed invention, a method for determining surface conditions for a field may be provided, the method comprising: moving an agricultural machine having an earth-working roller system over a field, the earth-working roller system comprising an earth-working roller assembly; detecting sensor signals for an oscillating movement of the earth-working roller assembly; detecting position data for the movement of the earth-working roller system over the field; and assigning the sensor signals to the position data, thereby, generating a digital (surface) map for the field indicative of position-dependent roughness and / or leveling information.

The digital (surface) map for the field indicative of position-dependent (soil) roughness and / or leveling information may be used for controlling operation of another agricultural machine in dependence on the surface (soil) roughness / leveling, such operation may be referred to as position-dependent operation control based on the digital map.

### Description of further embodiments

Following, embodiments are described with reference to figures. In the figures show:
- Fig. 1: a schematic perspective representation of an earth-working roller system for an agricultural machine such as an implement;
- Fig. 2: a schematic representation of the earth-working roller system from Fig. 1 in a top view;
- Fig. 3: schematic representations of another earth-working roller system;
- Fig. 4: schematic representations of a section view of the earth-working roller system with a joint assembly;
- Fig. 5: schematic representations of the section view from Fig. 4;
- Fig. 6: a schematic representation of another embodiment, not being part of the claimed invention, provided with an alternative design for the joint assembly;
- Fig. 7: schematic representation of a section view of the earth-working roller system with the joint assembly;
- Fig. 8: a schematic representation of further details of the section view in Fig. 7;
- Fig. 9: a schematic representation of the section view with further details;
- Fig. 10: a schematic perspective representation of a further earth-working roller system;
- Fig. 11: schematic representations of the further earth-working roller system in Fig. 10; and
- Fig. 12: a schematic representation of a system for detecting operation data for earth-working roller system, not being part of the claimed invention.

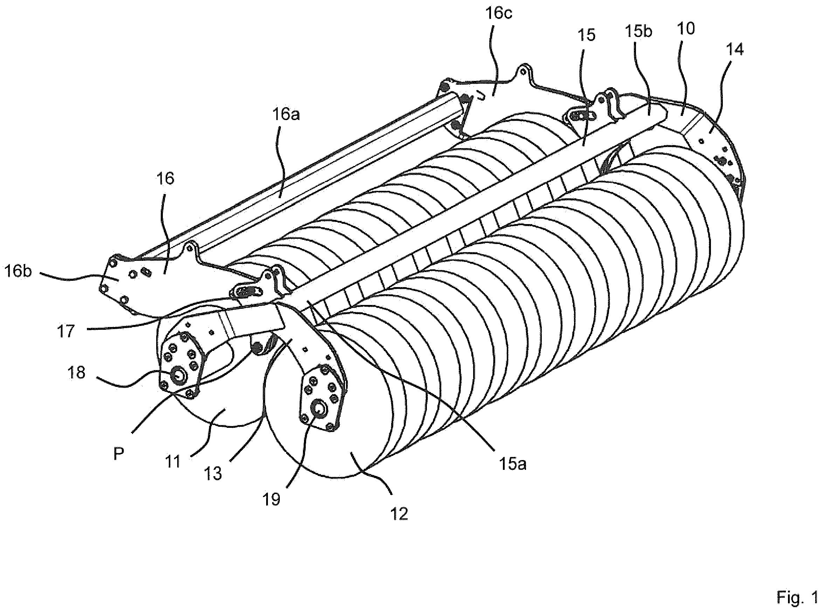

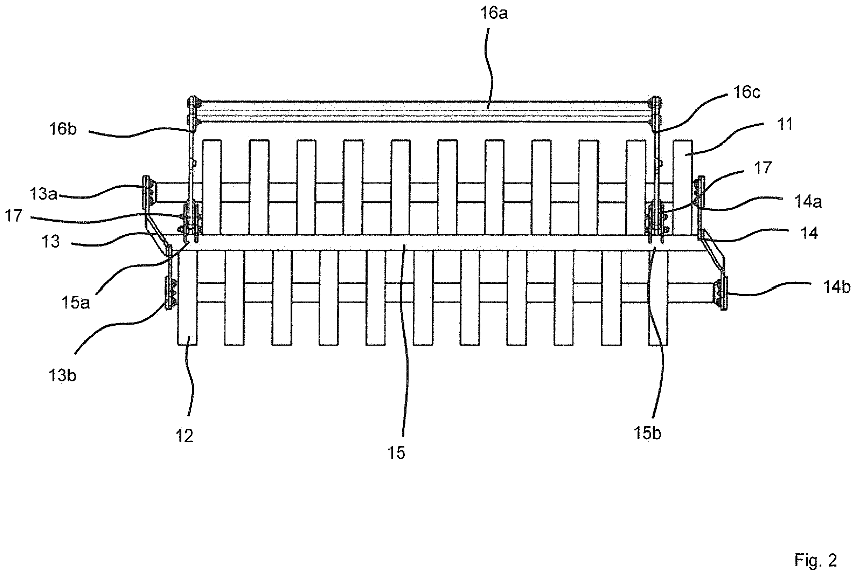

Fig. 1 and Fig. 2 show a schematic representations of an earth-working roller system comprising an earth-working roller assembly 10 having a first earth-working roller member 11 and a second earth-working roller member 12 which are supported by a first support member 13 and a second support member 14 fixedly connected to a draw bar 15. The earth-working roller system may also be referred to as a soil-working roller system.

The earth-working roller assembly 10 is mounted or coupled to a frame member 16 by means of a joint assembly 17. In the embodiment shown, the frame member 16 comprises another draw bar 16a, and a first further support member 16b and a second further support member 16c. The joint assembly 17 connecting to end sections 15a, 15b of the draw bar 15 allows for rotational or pivotal movement of the earth-working roller assembly 10 relative to the frame member 16 around a pivot point P.

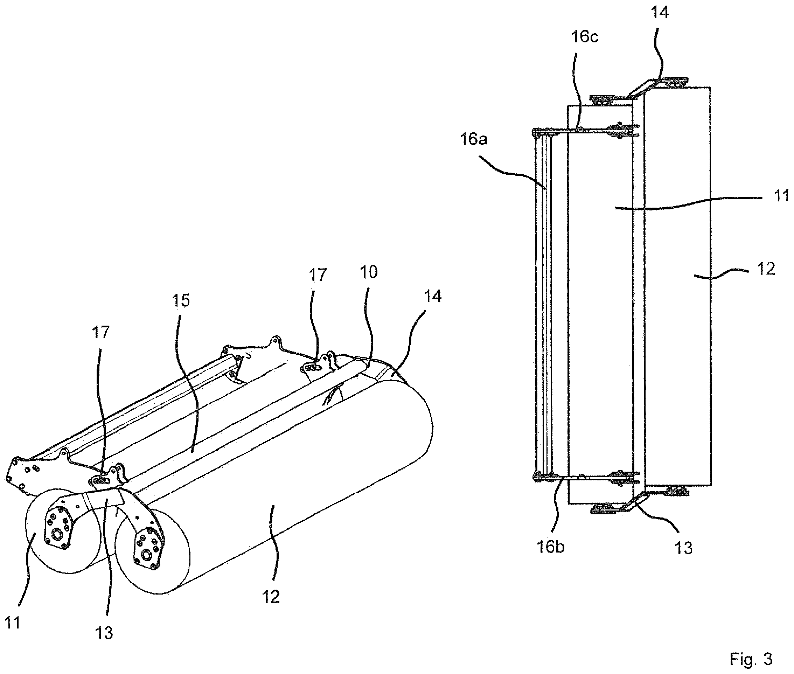

Fig. 3 shows another embodiment of an earth-working roller system for an agricultural machine such as an implement.

By the first and second support members 13, 14 a first axis of rotation 18 of the first earth-working roller member 11 and a second axis of rotation 19 of the second earth-working roller member 12 are held in a relative position. Such relative position can be adjusted as will be explained below. Alternatively, the relative position may not be adjustable (fixed) in other embodiments.

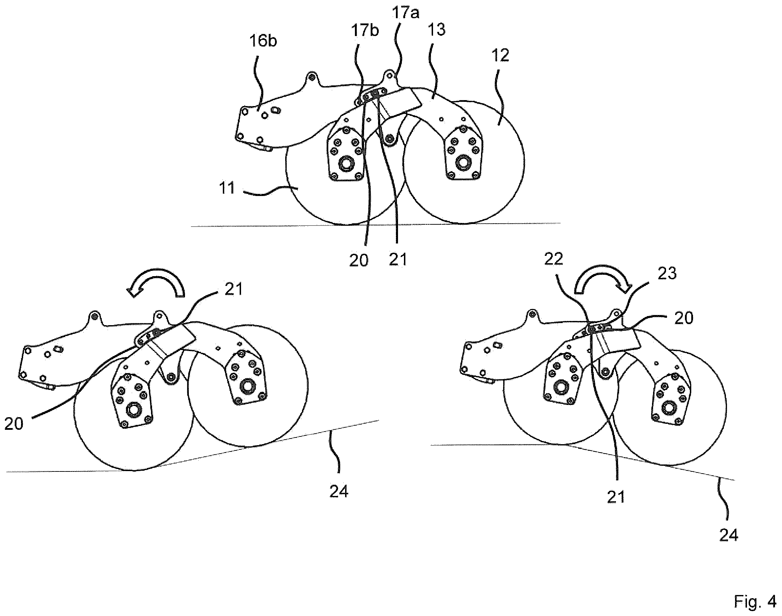

Fig. 4 shows schematic representations of a section of the earth-working roller system with the joint assembly 17. There is a first joint member 17a having a guide opening 20 and a second joint member 17b provided with a guide or guiding member 21 which is received in the guide opening 20. In case of relative (rotational or pivotal) movement between the frame member 16 and the earth-working roller assembly 10 the guide member 21 will be moved within the guide opening 20. End sections 22, 23 of the guide opening 20 provide limitation for the rotational or pivotal movement of the earth-working roller assembly 10 relative to the frame member 16. This can be seen from the lower representations in Fig. 4 showing different positions during the rotational movement of the earth-working roller assembly 10 relative to the frame member 16 depending a slope of the ground or soil 24 on which the first and second earth-working roller members 11, 12 are moving in operation.

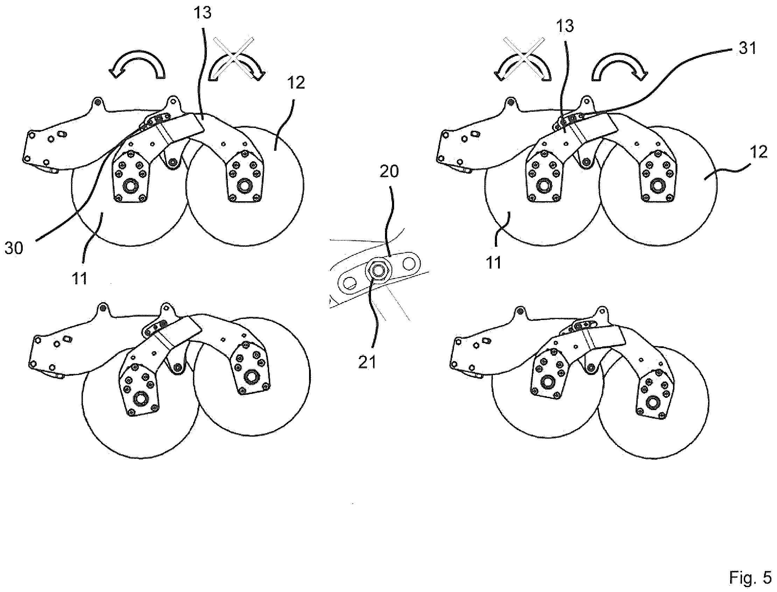

According to the representation in Fig. 5 the rotational movement of the earth-working roller assembly 10 relative to the frame member 16 is limited by releasably positioning stop members 30, 31 such as stop pins in the guide opening 20. In an alternative embodiment, , not being part of the claimed invention, the earth-working roller assembly 10 is prevented or blocked from rotational movement relative to the frame member 16.

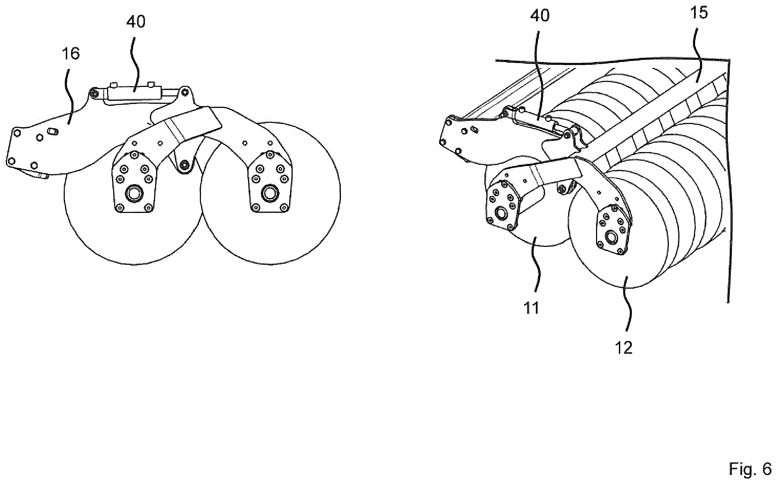

Referring to Fig. 6, an actuator member 40 is provided as part of the join assembly 17, the actuator member 40 functionally coupling to the frame member 16 and the earth-working roller assembly 10. The joint assembly 17 is provided with an alternative design, not being part of the claimed invention, compared to the embodiments in Fig. 1 to 5. However, the joint assembly 17 shown for the embodiments in Fig. 1 to 5 may be combined with the actuator member 40 in an alternative embodiment.

The guide opening 20 and the guide member 21 optionally to be combined with the one or more stop members 30, 31 may be part of a first adjustment mechanism adapted for adjusting limitation of the rotational movement of the earth-working roller assembly 10 relative to the frame member 16. As an alternative or in combination, the actuator member 40 may be part of or provide for the first adjustment mechanism.

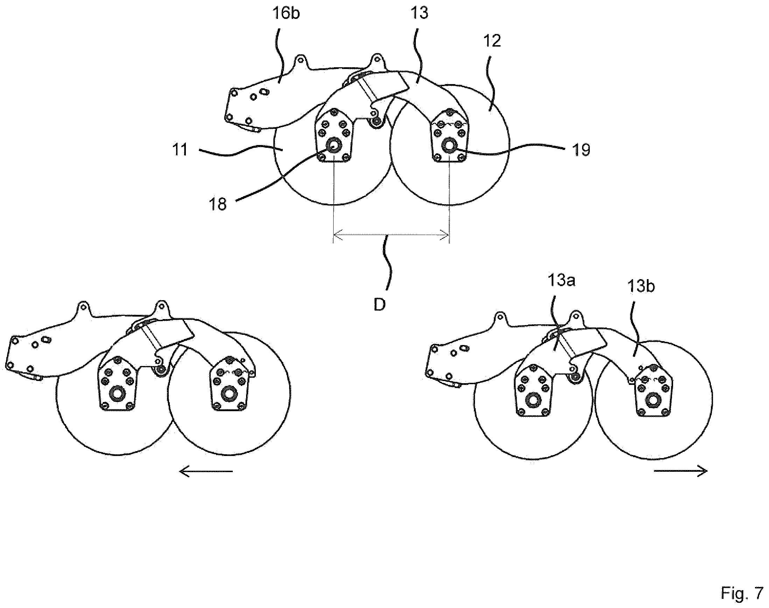

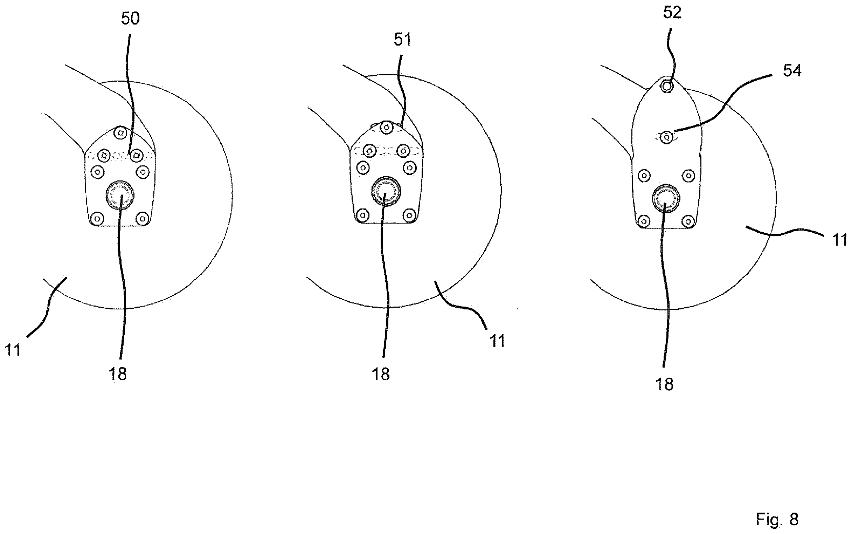

Referring to Fig. 7 to 9, a second adjustment mechanism is provided which allows for adjusting a distance D between the first and second axis of rotation 18, 19. According to Fig. 8, there may be a plurality of holes 50, or guiding holes 51. Also, in another embodiment a pivot point 52 may be combined with a guiding hole 54 for adjusting location of the first axis of rotation 18. Similar options for adjustment will apply to the second axis of rotation 19. First and second support elements 13a, 13b of the first support member 13 are fixedly connected to the draw bar 15, similarly first and second support elements 14a, 14b of the second support member 14 (see Fig. 2).

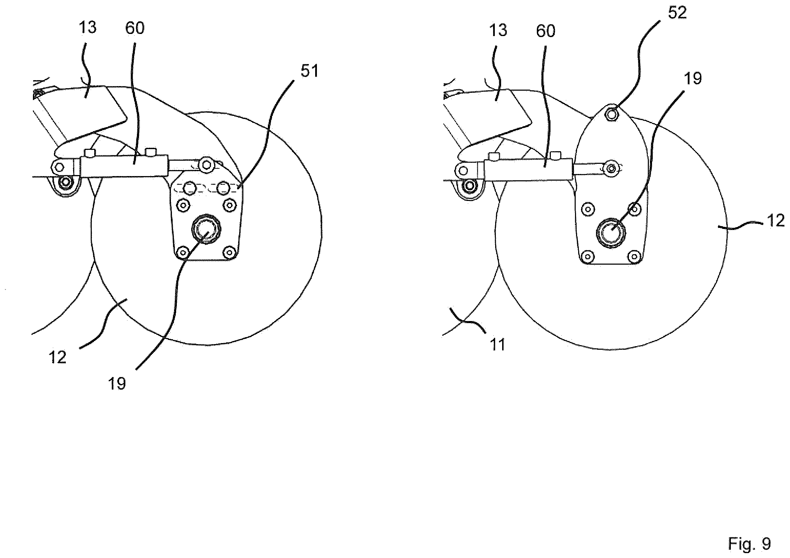

In a further embodiment, see also Fig. 9, there may be an additional actuator member 60 for providing a force for adjustment of the distance D between the first axis of rotation 18 of the first earth-working roller member 11 and the second axis of rotation 19 of the second earth-working roller member 12.

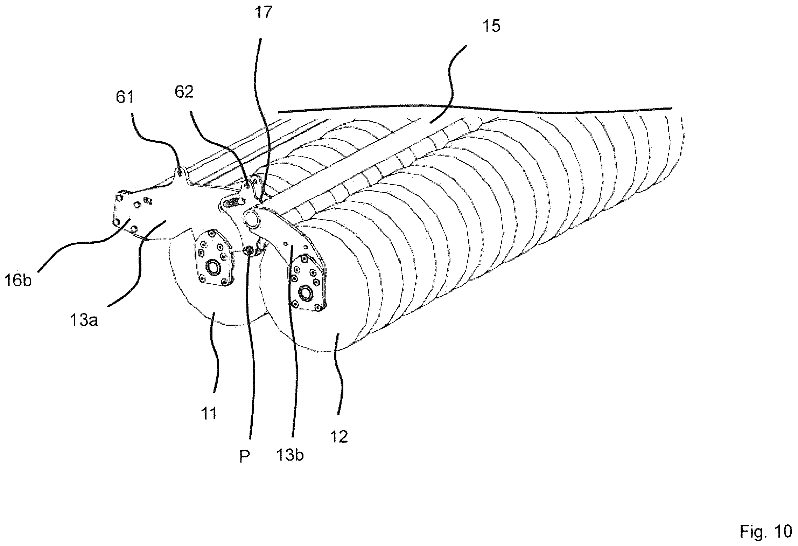

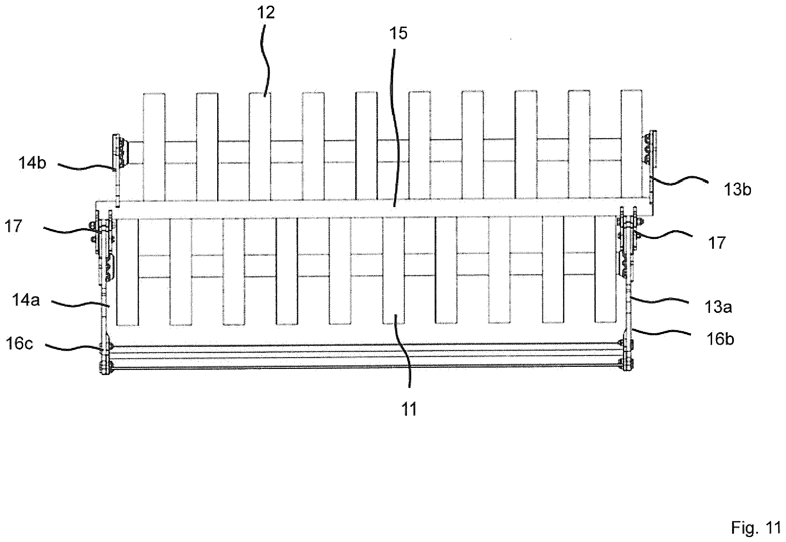

Fig. 10 and 11 show schematic representations of a further earth-working roller system. The first and second support members 13, 14 each are provided with the first support element 13a, 14a and the second support element 13b, 14b. The first support elements 13a, 14a holding the first earth-working roller 11 are provided by or on the frame elements 16b, 16c. The second support elements 13b, 14b are each received in a fixed position on the end sections 15a, 15b of the draw bar 15. The first and second support elements 13a, 14a; 13b, 14b are pivotably connected through the joint assembly 17 which is adjustable as it has been described above. Similar to the actuator 40 an actuator (not shown) may connect to connecting point 61, 62 on the first and second support elements13a, 14a; 13b, 14b.

The different options for adjustment described above, as a single measure for adjustment or in combination, may apply to the further embodiment in Fig. 10 and 11 *mutatis mutandis.*

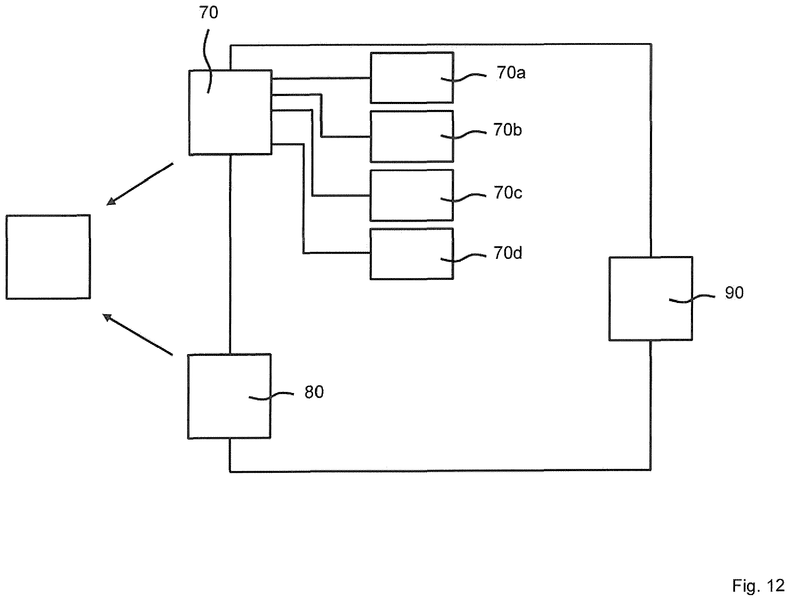

Fig. 12 shows a schematic representation of a system for detecting operation data for the earth-working roller system, not being part of the claimed invention. When the earth-working roller system is moving on the ground 24, articulation will be oscillating depending on soil or ground roughness. Such oscillation will be detected by a sensor device 70. The oscillation allows for determining information on soil roughness and soil leveling at the back of the agricultural machine provided with the earth-working roller assembly 10. For example, stony areas of the ground 24 can be determined from measurement signals detected by the sensor device 70.

With regard to the sensor device, an angle sensor 70a can be placed aligned with a pivot point in which the earth-working roller assembly 10 couples to the frame member 16 to measure angle oscillation.

As an alternative or in addition, a position sensor 70b can be placed between the earth-working roller assembly 10 couples to the frame member 16.

Further, as an alternative or in addition, a position sensor can be integrated in the actuator member 40. Such position sensor 70c and give desired information when actuator member 40 is not activated and free to follow soil contour.

A force sensor 70d may be located in a fixation of the actuator member 40 to measure load variation instead of oscillation and then get a similar info of soil roughness.

In case of the actuator member 40 being provided as a fluid actuator, a pressure sensor can be used to measure force variation on the actuator member 40. Further, as an alternative or in addition, a gravity sensor can be used to measure the acceleration of movable parts of the earth-working roller assembly 10 and thus determine the soil roughness / leveling. An acceleration sensor (for the vertical part) and / or a vibration sensor can be placed in different locations on the earth-working roller assembly 10, such sensor location allowing detection of sensor signals indicating movement of the some element or part of the earth-working roller assembly 10 due to movement over the soil.

The data or information determined from the measurement signals detected by the sensor device 70 may be combined with position data from a position sensor device 80, such as GPS (Global Positioning System) sensor. Data processing for the combination of the information may be performed by a data processing device 90, for example, a remote server device which as adapted to exchange data with the sensor device 70 and the position sensor device 80.

Thereby, it will be possible to generate a digital map with roughness and leveling information of the ground 24, such roughness and leveling information assigned to position data which may be detected while the measurement signals are detected by the sensor device 70. For example, position data indicative of a position on the field over which the earth-working roller assembly 10 moved may be assigned one or more sensor signals and / or roughness and leveling data derived from processing the sensor signal(s). A sensor signal height may be indicative of a level of roughness. Such level of roughness may be assigned to position data, thereby, generating the digital map.

Further operations like additional tillage, seeding, planting or the like can be optimized by using such digital map. For example, additional tillage may only be applied in an area of the field or ground where needed. Additional tillage may be applied with adjustments adapted to soil roughness previously measured, for example, forward speed with power harrow. A seed- rate adjustment may be applied according soil roughness. As a consequence, possible loss at the emergence may be reduced. As an alternative or in addition, speed adjustment of planting may be applied in dependence on the digital map.

The detecting of the sensor data for the earth-working roller system in operation and combining such data with positioning information is independent of the actual design of the earth-working roller system and may apply to systems different from the one described here.

## Claims

1. An earth-working roller system for an agricultural machine, comprising
- an earth-working roller assembly (10), comprising
- a first earth-working roller member (11) and a second earth-working roller member (12); and
- a first support member (13) and a second support member (14), the first and second support members (13, 14) supporting the first and second earth-working roller members (11, 12) on opposite sides in a relative position and allowing free rotation of the first and second earth-working roller members (11, 12);
- a frame member (16);
- a joint assembly (17) connecting the earth-working roller assembly (10) and the frame member (16), the joint assembly (17)
- being adapted to allow rotational movement of the earth-working roller assembly (10) relative to the frame member (16); and
- comprising a first joint member (17a) having a guiding opening (20) and a second joint member (17b) having a guiding member (21), the guiding member (21) being movable along the guiding opening (20) during the rotational movement of the earth-working roller assembly (10) relative to the frame member (16); and
- a first adjustment mechanism (30, 31) adapted to adjust a movement limitation for the rotational movement of the earth-working roller assembly (10) relative to the frame member (16);
**characterized by** one or more stop members releasably provided in the guiding opening (20), the one or more stop members defining a shortened trajectory compared to a trajectory provided for the guiding member (21) in the guiding opening (20) without having the one or more stop members releasably provided in the guiding opening.

2. The earth-working roller system according to claim 1, wherein the first adjustment mechanism (30, 31) is adapted to provide a first movement limitation and a second movement limitation different from the first movement limitation, wherein, for the rotational movement of the earth-working roller assembly (10) relative to the frame member (16), the first movement limitation allows for rotational movement along a first circular arc section and the second movement limitation allows for the rotational movement along a second circular arc section different from the first circular arc section.

3. The earth-working roller system according to claim 1 or 2 4, wherein the one or more stop members releasably provided in the guiding opening (20) are adapted to limit, with regard to a starting position of the earth-working roller assembly (10) relative to the frame member (16), rotational movement of the earth-working roller assembly (10) relative to the frame member (16) to at least one side.

4. The earth-working roller system according to claim 1 or 2 4, wherein the one or more stop members releasably provided in the guiding opening (20) are adapted to prevent, with regard to the starting position of the earth-working roller assembly (10) relative to the frame member (16), rotational movement of the earth-working roller assembly (10) relative to the frame member (16) to at least one side.

5. The earth-working roller system according to claim 3 or 4, wherein the one or more stop members releasably provided in the guiding opening (20) are adapted to allow, with regard to the starting position of the earth-working roller assembly relative to the frame member (16), rotational movement of the earth-working roller assembly (10) relative to the frame member (16) to an opposite side.

6. The earth-working roller system according to at least one of the preceding claims, further comprising an actuator member functionally connected to the joint assembly (17), the actuator member allowing the rotational movement of the earth-working roller assembly (10) relative to the frame member (16).

7. The earth-working roller system according to claim 6, wherein the actuator member is adapted to attenuate the rotational movement of the earth-working roller assembly (10) relative to the frame member (16).

8. The earth-working roller system according to claim 6 or 7, wherein the actuator member is adapted to limit the rotational movement of the earth-working roller assembly (10) relative to the frame member (16).

9. The earth-working roller system according to at least one of the claims 6 to 8, wherein the actuator member comprises at least one of: a hydraulic actuator adapted to provide a hydraulic force, a mechanical actuator adapted to provide a mechanical force such as a mechanical force such as a spindle member, and / or a spring member, a magnetic actuator adapted to provide a magnetic force, a pneumatic actuator adapted to provide a pneumatic force, and an electric actuator adapted to provide an electric force.

10. The earth-working roller system according to at least one of the preceding claims, further comprising a second adjustment mechanism adapted to adjust the relative position of the first and second earth-working roller members (11, 12) supported on the first and second support members (13, 14),

11. The earth-working roller system according to claim 10, wherein the second adjustment mechanism is adapted to adjust a distance between a first axis of rotation (18) for the first earth-working roller member (11) and a second axis of rotation (19) for the second earth-working roller member (12).

12. The earth-working roller system according to at least one of the preceding claims, further comprising, on opposite sides of the first and second earth-working roller members (11, 12), a first support element (13a; 14a) holding the first earth-working roller member (11), the first support element provided on the frame member (16) and pivotably connected to a second support element holding the second earth-working roller member (12).

13. The earth-working roller system according to at least one of the preceding claims, wherein the first and second earth-working roller members (11, 12) are selected from the following group of earth-working roller members: rolling baskets, rotors, conditioners, and packers.

## Patentansprüche

1. Bodenbearbeitungswalzensystem für eine landwirtschaftliche Maschine, aufweisend
- eine Bodenbearbeitungswalzenanordnung (10), aufweisend
- ein erstes Bodenbearbeitungswalzenelement (11) und ein zweites Bodenbearbeitungswalzenelement (12); und
- ein erstes Halteelement (13) und ein zweites Halteelement (14), wobei das erste und das zweite Halteelement (13, 14) das erste und das zweite Bodenbearbeitungswalzenelement (11, 12) an entgegengesetzten Seiten in einer relativen Position halten und eine freie Drehung des ersten und des zweiten Bodenbearbeitungswalzenelements (11, 12) ermöglichen;
- ein Rahmenelement (16);
- eine Verbindungsanordnung (17), welche die Bodenbearbeitungswalzenanordnung (10) und das Rahmenelement (16) miteinander verbindet, wobei die Verbindungsanordnung (17)
- dafür ausgelegt ist, eine Drehbewegung der Bodenbearbeitungswalzenanordnung (10) relativ zum Rahmenelement (16) zu ermöglichen; und
- ein erstes Verbindungselement (17a) aufweisend eine Führungsöffnung (20) und ein zweites Verbindungselement (17b) aufweisend ein Führungsglied (21) aufweist, wobei das Führungsglied (21) während der Drehbewegung der Bodenbearbeitungswalzenanordnung (10) relativ zum Rahmenelement (16) entlang der Führungsöffnung (20) beweglich ist; und
- einen ersten Einstellmechanismus (30, 31), welcher dafür ausgelegt ist, eine Bewegungsbegrenzung für die Drehbewegung der Bodenbearbeitungswalzenanordnung (10) relativ zum Rahmenelement (16) einzustellen;
**gekennzeichnet durch** ein oder mehrere Anschlagelemente, welche lösbar in der Führungsöffnung (20) bereitgestellt sind, wobei das eine oder die mehreren Anschlagelemente eine verkürzte Bewegungsbahn definieren im Vergleich zu einer Bewegungsbahn, welche für das Führungsglied (21) in der Führungsöffnung (20) bereitgestellt ist, ohne dass das eine oder die mehreren lösbar in der Führungsöffnung bereitgestellten Anschlagelemente angeordnet sind.

2. Bodenbearbeitungswalzensystem nach Anspruch 1, wobei der erste Einstellmechanismus (30, 31) dafür ausgelegt ist, eine erste Bewegungsbegrenzung und eine zweite Bewegungsbegrenzung, welche sich von der ersten Bewegungsbegrenzung unterscheidet, bereitzustellen, wobei die erste Bewegungsbegrenzung für die Drehbewegung der Bodenbearbeitungswalzenanordnung (10) relativ zum Rahmenelement (16) eine Drehbewegung entlang eines ersten Kreisbogenabschnitts ermöglicht, und die zweite Bewegungsbegrenzung die Drehbewegung entlang eines zweiten Kreisbogenabschnitts, welcher sich vom ersten Kreisbogenabschnitt unterscheidet, ermöglicht.

3. Bodenbearbeitungswalzensystem nach Anspruch 1 oder 2, wobei das eine oder die mehreren Anschlagelemente, welche lösbar in der Führungsöffnung (20) bereitgestellt sind, dafür ausgelegt ist/sind, in Bezug auf eine Startposition der Bodenbearbeitungswalzenanordnung (10) relativ zum Rahmenelement (16) eine Drehbewegung der Bodenbearbeitungswalzenanordnung (10) relativ zum Rahmenelement (16) zu mindestens einer Seite zu begrenzen.

4. Bodenbearbeitungswalzensystem nach Anspruch 1 oder 2, wobei das eine oder die mehreren Anschlagelemente, welche lösbar in der Führungsöffnung (20) bereitgestellt sind, dafür ausgelegt ist/sind, in Bezug auf die Startposition der Bodenbearbeitungswalzenanordnung (10) relativ zum Rahmenelement (16) eine Drehbewegung der Bodenbearbeitungswalzenanordnung (10) relativ zum Rahmenelement (16) zu mindestens einer Seite zu verhindern.

5. Bodenbearbeitungswalzensystem nach Anspruch 3 oder 4, wobei das eine oder die mehreren Anschlagelemente, welche lösbar in der Führungsöffnung (20) bereitgestellt sind, dafür ausgelegt ist/sind, in Bezug auf die Startposition der Bodenbearbeitungswalzenanordnung relativ zum Rahmenelement (16) eine Drehbewegung der Bodenbearbeitungswalzenanordnung (10) relativ zum Rahmenelement (16) zu einer entgegengesetzten Seite zu ermöglichen.

6. Bodenbearbeitungswalzensystem nach mindestens einem der vorstehenden Ansprüche, ferner aufweisend ein Betätigungselement, welches mit der Verbindungsanordnung (17) wirkverbunden ist, wobei das Betätigungselement die Drehbewegung der Bodenbearbeitungswalzenanordnung (10) relativ zum Rahmenelement (16) ermöglicht.

7. Bodenbearbeitungswalzensystem nach Anspruch 6, wobei das Betätigungselement dafür ausgelegt ist, die Drehbewegung der Bodenbearbeitungswalzenanordnung (10) relativ zum Rahmenelement (16) zu dämpfen.

8. Bodenbearbeitungswalzensystem nach Anspruch 6 oder 7, wobei das Betätigungselement dafür ausgelegt ist, die Drehbewegung der Bodenbearbeitungswalzenanordnung (10) relativ zum Rahmenelement (16) zu begrenzen.

9. Bodenbearbeitungswalzensystem nach mindestens einem der Ansprüche 6 bis 8, wobei da Betätigungselement mindestens eines der Elemente aus der folgenden Gruppe aufweist: ein hydraulisches Betätigungselement, welches dafür ausgelegt ist, eine hydraulische Kraft bereitzustellen, ein mechanisches Betätigungselement, welches dafür ausgelegt ist, eine mechanische Kraft, wie zum Beispiel eine mechanische Kraft bereitzustellen, wie zum Beispiel ein Spindelelement und/oder ein Federelement, ein magnetisches Betätigungselement, welches dafür ausgelegt ist, eine magnetische Kraft bereitzustellen, ein pneumatisches Betätigungselement, welches dafür ausgelegt ist, eine pneumatische Kraft bereitzustellen, und ein elektrisches Betätigungselement, welches dafür ausgelegt ist, eine elektrische Kraft bereitzustellen.

10. Bodenbearbeitungswalzensystem nach mindestens einem der vorstehenden Ansprüche, ferner aufweisend einen zweiten Einstellmechanismus, welcher dafür ausgelegt ist, die relative Position des ersten und des zweiten Bodenbearbeitungswalzenelements (11, 12), welche vom ersten und vom zweiten Halteelement (13, 14) gehalten werden, einzustellen.

11. Bodenbearbeitungswalzensystem nach Anspruch 10, wobei der zweite Einstellmechanismus dafür ausgelegt ist, einen Abstand zwischen einer ersten Drehachse (18) für das erste Bodenbearbeitungswalzenelement (11) und einer zweiten Drehachse (19) für das zweite Bodenbearbeitungswalzenelement (12) einzustellen.

12. Bodenbearbeitungswalzensystem nach mindestens einem der vorstehenden Ansprüche, ferner aufweisend, an entgegengesetzten Seiten des ersten und des zweiten Bodenbearbeitungswalzenelements (11, 12), ein erstes Halteelemente (13a; 14a), welches das erste Bodenbearbeitungsrollenelement (11) hält, wobei das erste Halteelement am Rahmenelement (16) bereitgestellt und schwenkbar mit einem zweiten Haltelement, welches das zweite Bodenbearbeitungsrollenelement (12) hält, verbunden ist.

13. Bodenbearbeitungswalzensystem nach mindestens einem der vorstehenden Ansprüche, wobei das erste und das zweite Bodenbearbeitungsrollenelement (11, 12) aus der folgenden Gruppe von Bodenbearbeitungsrollenelementen ausgewählt sind: Rollkörbe, Rotoren, Bodenaufbereiter und Verdichter.

## Revendications

1. Système de rouleaux de travail de la terre pour une machine agricole, comprenant
- un ensemble de rouleaux de travail de la terre (10) comprenant
- un premier élément de rouleau de travail de la terre (11) et un deuxième élément de rouleau de travail de la terre (12) ; et
- un premier élément de support (13) et un deuxième élément de support (14), les premier et deuxième éléments de support (13, 14) supportant les premier et deuxième éléments de rouleau de travail de la terre (11, 12) sur des côtés opposés dans une position relative et permettant une rotation libre des premier et deuxième éléments de rouleau de travail de la terre (11, 12) ;
- un élément de cadre (16) ;
- un ensemble d'articulation (17) reliant l'ensemble de rouleaux de travail de la terre (10) et l'élément de cadre (16),
l'ensemble d'articulation (17)
- étant adapté pour permettre un mouvement de rotation de l'ensemble de rouleaux de travail de la terre (10) par rapport à l'élément de cadre (16) ; et
- comprenant un premier élément d'articulation (17a) ayant une ouverture de guidage (20) et un deuxième élément d'articulation (17b) ayant un élément de guidage (21), l'élément de guidage (21) étant mobile le long de l'ouverture de guidage (20) pendant le mouvement de rotation de l'ensemble de rouleaux de travail de la terre (10) par rapport à l'élément de cadre (16) ; et
- un premier mécanisme de réglage (30, 31) adapté pour régler une limitation de mouvement pour le mouvement de rotation de l'ensemble de rouleaux de travail de la terre (10) par rapport à l'élément de cadre (16) ;
**caractérisé par** un ou plusieurs éléments d'arrêt fournis de manière détachable dans l'ouverture de guidage (20), l'un ou les plusieurs éléments d'arrêt définissant une trajectoire raccourcie en comparaison avec une trajectoire fournie pour l'élément de guidage (21) dans l'ouverture de guidage (20) sans avoir l'un ou les plusieurs éléments d'arrêt fournis de manière détachable dans l'ouverture de guidage.

2. Système de rouleaux de travail de la terre selon la revendication 1, dans lequel le premier mécanisme de réglage (30, 31) est adapté pour fournir une première limitation de mouvement et une deuxième limitation de mouvement différente de la première limitation de mouvement, dans lequel, pour le mouvement de rotation de l'ensemble de rouleaux de travail de la terre (10) par rapport à l'élément de cadre (16), la première limitation de mouvement permet un mouvement de rotation le long d'une première section d'arc circulaire et la deuxième limitation de mouvement permet le mouvement de rotation le long d'une deuxième section d'arc circulaire différente de la première section d'arc circulaire.

3. Système de rouleaux de travail de la terre selon la revendication 1 ou 2, dans lequel l'un ou les plusieurs éléments d'arrêt fournis de manière détachable dans l'ouverture de guidage (20) sont adaptés pour limiter, en ce qui concerne une position de départ de l'ensemble de rouleaux de travail de la terre (10) par rapport à l'élément de cadre (16), un mouvement de rotation de l'ensemble de rouleaux de travail de la terre (10) par rapport à l'élément de cadre (16) vers au moins un côté.

4. Système de rouleaux de travail de la terre selon la revendication 1 ou 2, dans lequel l'un ou les plusieurs éléments d'arrêt fournis de manière détachable dans l'ouverture de guidage (20) sont adaptés pour empêcher, en ce qui concerne la position de départ de l'ensemble de rouleaux de travail de la terre (10) par rapport à l'élément de cadre (16), un mouvement de rotation de l'ensemble de rouleaux de travail de la terre (10) par rapport à l'élément de cadre (16) vers au moins un côté.

5. Système de rouleaux de travail de la terre selon la revendication 3 ou 4, dans lequel l'un ou les plusieurs éléments d'arrêt fournis de manière détachable dans l'ouverture de guidage (20) sont adaptés pour permettre, en ce qui concerne la position de départ de l'ensemble de rouleaux de travail de la terre par rapport à l'élément de cadre (16), un mouvement de rotation de l'ensemble de rouleaux de travail de la terre (10) par rapport à l'élément de cadre (16) vers un côté opposé.

6. Système de rouleaux de travail de la terre selon l'une au moins des revendications précédentes, comprenant en outre un élément d'actionnement relié de manière fonctionnelle à l'ensemble d'articulation (17), l'élément d'actionnement permettant le mouvement de rotation de l'ensemble de rouleaux de travail de la terre (10) par rapport à l'élément de cadre (16).

7. Système de rouleaux de travail de la terre selon la revendication 6, dans lequel l'élément d'actionnement est adapté pour atténuer le mouvement de rotation de l'ensemble de rouleaux de travail de la terre (10) par rapport à l'élément de cadre (16).

8. Système de rouleaux de travail de la terre selon la revendication 6 ou 7, dans lequel l'élément d'actionnement est adapté pour limiter le mouvement de rotation de l'ensemble de rouleaux de travail de la terre (10) par rapport à l'élément de cadre (16).

9. Système de rouleaux de travail de la terre selon l'une au moins des revendications 6 à 8, dans lequel l'élément d'actionnement comprend au moins l'un parmi : un actionneur hydraulique adapté pour fournir une force hydraulique, un actionneur mécanique adapté pour fournir une force mécanique telle une force mécanique telle qu'un élément d'arbre et/ou un élément de ressort, un actionneur magnétique adapté pour fournir une force magnétique, un actionneur pneumatique adapté pour fournir une force pneumatique, et un actionneur électrique adapté pour fournir une force électrique.

10. Système de rouleaux de travail de la terre selon l'une au moins des revendications précédentes, comprenant en outre un deuxième mécanisme de réglage adapté pour régler la position relative des premier et deuxième éléments de rouleau de travail de la terre (11, 12) supportés sur les premier et deuxième éléments de support (13, 14).

11. Système de rouleaux de travail de la terre selon la revendication 10, dans lequel le deuxième mécanisme de réglage est adapté pour régler une distance entre un premier axe de rotation (18) pour le premier élément de rouleau de travail de la terre (11) et un deuxième axe de rotation (19) pour le deuxième élément de rouleau de travail de la terre (12).

12. Système de rouleaux de travail de la terre selon l'une au moins des revendications précédentes, comprenant en outre, sur des côtés opposés des premier et deuxième éléments de rouleau de travail de la terre (11, 12), un premier élément de support (13a ; 14a) maintenant le premier rouleau de travail de la terre (11), le premier élément de support étant fourni sur l'élément de cadre (16) et relié de façon pivotante à un deuxième élément de support maintenant le deuxième élément de rouleau de travail de la terre (12).

13. Système de rouleaux de travail de la terre selon l'une au moins des revendications précédentes, dans lequel les premier et deuxième éléments de rouleau de travail de la terre (11, 12) sont sélectionnés dans le groupe suivant d'éléments de rouleau de travail de la terre : des rouleaux-cages, des rotors, des conditionneurs et des rouleaux compacteurs.
